# EUROPÄISCHE PATENTANMELDUNG

(11) **EP 4 692 197 A1**
(43) Veröffentlichungstag der Anmeldung: **11.02.2026**
(21) Anmeldenummer: 24193334.0
(22) Anmeldetag: 07.08.2024
(51) Int. Cl.: C08K 3/22, C08K 7/16, B41M 5/00, B82Y 30/00

(54) **LASERMARKIERBARES POLYMER SOWIE DESSEN VERWENDUNG**

(71) Anmelder: Eppendorf SE, 22339 Hamburg (DE)
(72) Erfinder: Taesler, Christian, 22391 Hamburg (DE)
(74) Vertreter: RGTH

(57) **Zusammenfassung**

Die Erfindung betrifft ein lasermarkierbares Polymer, das UV-absorbierende keramische Nanopartikel als Additive enthält, die selbst keine Eigenfarbe aufweisen, wobei die Nanopartikel ausgewählt sind aus der Gruppe, bestehend aus Titandioxid, Zinkoxid, Zirkoniumoxid, Aluminiumoxid, Magnesiumoxid, Siliziumdioxid, Alkali- und Erdalkalimetalltitanaten und -zirkonaten oder Mischungen dieser. Weiterhin sind dessen Verwendung als Material zur Herstellung von Formmassen, Halbzeug oder Fertigteilen, die damit hergestellten Formmassen, Halbzeuge und Fertigteile sowie ein Verfahren zur Herstellung einer Markierung und/oder Beschriftung auf diesen unter Verwendung eines UV-Laser offenbart. Die erzeugte Markierung und/oder Beschriftung zeichnet sich durch besonders feine und scharfe Konturen mit hoher Qualität aus.

## Beschreibung

### Technisches Gebiet der Erfindung

Die Erfindung betrifft ein lasermarkierbares Polymer sowie dessen Verwendung. Weiterhin beschrieben sind auch die mit dem lasermarkierbaren Polymer hergestellten Formmassen, Halbzeuge und Fertigteile sowie ein Verfahren zur Markierung dieser unter Verwendung eines UV-Lasers.

### Hintergrund zur Erfindung

Bekanntermaßen kann Laserstrahlung dafür eingesetzt werden, um Materialien zu beschriften oder zu markieren. Durch Einwirkung der Laserstrahlung wird dabei das zu beschriftende Material lokal chemisch in der Art verändert, dass ein farblicher Kontrast zu dem nicht mit Laserstrahlung bestrahlten Material entsteht. Die farbliche Veränderung dient dann als Beschriftung oder Markierung direkt auf dem Material.

Ein Material, das hierfür in Frage kommt, sind Polymere, aus denen Kunststoffe hergestellt werden. Speziell bei Kunststoffen entsteht in den meisten Fällen unter Einwirkung der Laserstrahlung bzw. der Laserenergie dadurch ein Kontrast, dass das organische Kunststoffmaterial lokal carbonisiert, also in Graphit- bzw. rußartigen Kohlenstoff umgewandelt wird, und somit dunkel gefärbte bzw. schwarze Flächen oder Stellen in Form von Beschriftungen oder Markierungen entstehen. Diese dunklen oder schwarzen Beschriftungen oder Markierungen sind aufgrund des Hell-Dunkel-Kontrasts mit dem umgebenden Kunststoff lesbar.

Um diesen Carbonisierungseffekt und damit den entstehenden Hell-Dunkel-Kontrast zu verstärken, werden dem Kunststoffmaterial üblicherweise in geringen Anteilen Nano- oder Mikropartikel beigemischt, welche die Laserstrahlung im Bereich der eingesetzten Laserfrequenz besonders gut absorbieren und die Strahlung in Wärme verwandeln können. Die für die Laserbeschriftung von Kunststoffen am häufigsten verwendete Frequenz beträgt 1064 nm (Nahinfrarot, NIR). Dem Kunststoff werden daher bei dessen Herstellung bzw. Compoundierung entsprechende NIRabsorbierende Partikel zugegeben.

Für die Laserbeschriftung finden in der Regel auf Antimon-basierende Zusätze (z.B. Antimonoxid) im Kunststoff Verwendung. So beschreibt beispielweise die WO 02/083567 A2 Additive für die Lasermarkierung von Kunststoffen, die aus einem kalzinierten Antimon-Zinn-Mischoxid bestehen, in welchem die Antimonkonzentration an der Oberfläche höher ist als in den Partikeln als Ganzes. Die Partikelgröße beträgt 0,1 -10 µm, vorzugsweise 0,5 - 5 µm. Mit dem Additiv werden dunkle Markierungen auf hellen Hintergründen erhalten.

Diese auf Antimon basierenden Zusätze haben jedoch zahlreiche Nachteile: So weisen diese eine dunkel metallische Eigenfarbe auf, wodurch die Farbgebung eines Kunststoffes deutlich verändert wird, so dass sogar in unerwünschter Weise eine Dunkelfärbung des Kunststoffes resultiert. Dies hat speziell bei der Laserbeschriftung von transparenten Kunststoffen gravierende Auswirkungen, da die entstehende rauchglasartige Verfärbung besonders gut sichtbar ist und bei den Kunststoffteilen wie eine Verschmutzung aussieht. Um diesen unerwünschten "Verschmutzungseffekt" bei der Lasermarkierung von transparenten oder helleingefärbten Kunststoffen zu vermeiden, werden hierfür statt den üblichen NIR-Lasern sogenannte Markierungslaser verwendet, welche UV-Laserstrahlung von in der Regel 355 nm (UVA) erzeugen. Ein weiterer Nachteil von Antimon-basierten Zusätzen ist, dass diese für die Umwelt schädlich und auch bei der Verarbeitung gesundheitsschädlich sein können, so dass entsprechende Maßnahmen bei der Herstellung getroffen werden müssen. Zudem ist die Entsorgung von Antimonhaltigen Abfällen aufwendig und kostspielig. Es liegt daher ein Bedarf vor, Antimonbasierte Zusätze zu Kunststoffen zu vermeiden.

Weiterhin sind aus der WO 2015/188917 A1 lasermarkierbare und/oder laserschweißbare Polymere, bekannt geworden, die als Absorber mindestens ein mit Fluor dotiertes Zinnoxid (FTO) enthalten. Bevorzugt beträgt der Gehalt an Fluor im Fluor dotierten Zinnoxid 1 bis 15 Mol%, bezogen auf das Zinnoxid, das in einer anzahlgewichteten Partikelgröße von < 5 µm, gemessen für D90 mittels Laserbeugung, vorliegt. Besonders bevorzugt sind Partikelgrößen von 1 µm. Das Laseradditiv wird in Konzentrationen von 0,01 bis 1 Gew.-%, bezogen auf das Polymer, eingesetzt. Hierdurch können insbesondere farbige und dunkel eingefärbte Kunststoffmaterialien mit einer hellen Beschriftung versehen werden. Wenn ein Kunststoffmaterial farblos und transparent bis opak ist, sind die hellen Markierungen aufgrund des geringen Kontrasts nur schwer zu erkennen. Ein Farbmittel kann dann zusätzlich eingesetzt werden, führt aber wieder zu unerwünschten Verfärbungen des Kunststoffs.

Es besteht grundsätzlich auch die Möglichkeit, Kunststoffe ohne den Zusatz von Laseradditiven, wie diese bereits beschrieben wurden, unter Verwendung von UV-Laserstrahlung zu beschriften, da die energiereiche UV-Laserstrahlung direkt einen Carbonisierungseffekt im Kunststoffmaterial hervorruft. Abhängig von der Kunststoffsorte sind die Ergebnisse hinsichtlich Kontraststärke und auch Kantenschärfe jedoch wenig zufriedenstellend. Beispielweise können mit Polycarbonat durchaus gute Ergebnissen erzielt werden, wohingegen vor allem bei transparentem Polypropylen und Polystyrol in der Regel ungenügende Ergebnisse resultieren. Dies ist besonders dann der Fall, wenn feine, scharfe Konturen mit hoher Qualitätsanforderung erwünscht sind. Die Verwendung von den bekannten für NIR-Laser konzipierten Additiven funktioniert zwar auch bei UV-Laserstrahlung, diese führen dann aber wieder zu dem schon erwähnten Verschmutzungseffekt.

Es besteht daher ein großes Interesse und ein großer Bedarf an lasermarkierbaren polymeren Materialien, die die Nachteile aus dem Stand der Technik nicht zeigen, keine nachteiligen Antimon-basierten Zusätze einsetzen und eine verbesserte Markierungs- bzw. Beschriftungsqualität ohne Verfärbung der polymeren Materialien bereitstellen. Insbesondere soll auch eine Markierung mit feinen, scharfen Konturen mit hoher Qualität in einer breiten Vielfalt von polymeren Materialien möglich sein.

### Detaillierte Beschreibung der Erfindung

Die oben geschilderte Aufgabe wird erfindungsgemäß gelöst durch ein lasermarkierbares Polymer, das UV-absorbierende keramische Nanopartikel als Additive enthält, die selbst keine Eigenfarbe aufweisen, wobei die Nanopartikel ausgewählt sind aus der Gruppe, bestehend aus Titandioxid, Zinkoxid, Zirkoniumoxid, Aluminiumoxid, Magnesiumoxid, Siliziumdioxid, Alkali- und Erdalkalimetalltitanaten und -zirkonaten oder Mischungen dieser.

Der Ausdruck "lasermarkierbar" bedeutet im Rahmen der vorliegenden Erfindung, dass ein Polymer oder polymeres Material, insbesondere auch hieraus hergestellte Formmassen, Halbzeug und Fertigteile aus Kunststoff, mit einem UV-Laser mit Markierungen aller Art, die auch Beschriftungen jeder Art und Form umfassen, versehen werden können. Die Markierungen bzw. Beschriftungen sind beispielweise Buchstaben und/oder Zahlen in der gewünschten Form und Größe sowie mit einem UV-Laser erzeugbare Bilder. Dies können beispielweise Produktionsdaten, Chargennummern, Verfallsdaten, Barcodes, 2D-Codes, wie QR-Codes, Wort- und/oder Bild-Marken, wie Firmenlogos, Seriennummern und dergleichen sein.

Damit ein Polymer lasermarkierbar wird, werden erfindungsgemäß keramische Nanopartikel als (Laser-)Additive für das Polymer eingesetzt, die ausschließlich im UV-Bereich absorbieren. Diese Nanopartikel weisen selbst keine Eigenfarbe auf, so dass - je nach Partikelgröße - das sichtbare Licht, welches auf das aus dem Polymer aufgebauten Kunststoffteil trifft, entweder gar nicht oder bei entsprechend großen Partikeln vollständig gestreut wird und somit zu einer Weißfärbung führt. Da die Nanopartikel der Erfindung kein sichtbares Licht absorbieren, kommt es nicht zu einer unerwünschten Verfärbung des Polymers, wie im Stand der Technik häufig zu beobachten. Ein Verschmutzungseffekt der Polymere und daraus hergestellten Kunststoffe durch die zugesetzten keramischen Nanopartikel wird daher nicht beobachtet.

Der Begriff "keramisch" bedeutet, dass die Nanopartikel aus einer oder mehreren in Keramiken, wie oxidischen (auf Oxid-Basis), carbidischen (auf Kohlenstoff-Basis) oder nitridischen (auf Nitrid-Basis) Keramiken, verwendeten Verbindungen ausgewählt sind. Dies sind in der Regel relativ harte, inerte Materialien, die bevorzugt eine glatte Oberfläche aufweisen, gegen Oxidation beständig und nicht wasserlöslich sind, und daher mit der Polymermatrix, in der diese vorliegen, nicht reagieren oder die Polymermatrix in keiner Weise nachteilig beeinflussen.

Die keramischen Nanopartikel, die selbst keine Eigenfarbe aufweisen, sind ausgewählt aus Titandioxid, Zinkoxid, Zirkoniumoxid, Aluminiumoxid, Magnesiumoxid, Siliziumdioxid, Alkali- und Erdalkalimetalltitanaten und -zirkonaten oder Mischungen dieser. Besonders bevorzugt sind (TiO₂) und Zinkoxid (ZnO), die zu besonders guten Ergebnissen bei der Lasermarkierung bzw. -beschriftung führen. Titandioxid absorbiert beispielweise Strahlung, deren Wellenlänge ≤ 370 nm beträgt, und Zinkoxid absorbiert beispielweise Strahlung, deren Wellenlänge ≤ 365 nm liegt, so dass längerwelliges Licht nicht absorbiert wird und keine Eigenfarbe der Nanopartikel vorliegt.

Der Begriff "Nanopartikel" bedeutet, dass die Partikel bevorzugt Partikelgrößen im nm-Bereich aufweisen, bevorzugt einen Partikeldurchmesser im Bereich von 3 bis 200 nm, bevorzugter 3 bis 150 nm, noch bevorzugter 3 bis 100 nm, insbesondere 3 bis 75 nm oder 3 bis 50 nm oder 3 bis 30 nm oder 3 bis 20 nm.

Ein Messverfahren zur Bestimmung der Nanopartikelgrößen, das eingesetzt werden kann, ist beispielweise ein Lichtstreuungsverfahren, z. B. die Mehr-Winkel Lichtstreuung (MALS) (siehe https://www.wyatt.com/de/products/instruments/multi-angle-light-scattering-detectors-sec-mals.html?gad_source=1) oder die Dynamische Lichtstreuung (DLS) (siehe https://www.microtrac.de/de/produkte/dynamischelichtstreuung/?gad_source=1).

Gemäß einer Ausführungsform weisen die verwendeten Nanopartikel alle denselben Partikeldurchmesser mit enger Größenverteilung auf. Erfindungsgemäß können die Partikel auch alle in nahezu perfekter sphärischer Form vorliegen, d.h. kugelförmig sein. Es liegen dann keramische Mikrokugeln in (nahezu perfekter) sphärischer Form, bevorzugt mit denselben Durchmesser mit enger Größenverteilung, vor. Erfindungsgemäß können auch Hohlkugeln verwendet werden, Vollkugeln (massive Mikrokugeln) sind jedoch bevorzugt.

Erfindungsgemäß können die Nanopartikel so ausgewählt sein, dass diese alle dieselbe Zusammensetzung aufweisen oder hieraus bestehen, beispielsweise alle aus Zinkoxid (ZnO) bestehen. Alternativ können die Nanopartikel auch eine Mischung von zwei oder mehreren der angegebenen keramischen Verbindungen aufweisen oder hieraus bestehen.

Die beschriebenen keramischen Nanopartikel, wie beispielweise Titandioxid und Zinkoxid, sind kommerziell in großer Auswahl und relativ kostengünstig erhältlich; Titandioxid und Zinkoxid sind bekannte UV-Absorber, die u. a. in Sonnencremes kommerziell in großem Maßstab zum Einsatz kommen.

Die Nanopartikel können hergestellt werden oder käuflich erworben werden oder kommerziell erworbene Nanopartikel mit größerer Partikelgröße können auf eine geeignete kleinere Partikelgröße unter Verwendung geeigneter Mühlen, z. B. Luftstrahlmühlen und/oder Perlmühlen, feingemahlen werden.

Erfindungsgemäß ist ein sehr geringer Anteil der Nanopartikel im Polymer bereits ausreichend, um als Laseradditiv für die Markierung bzw. Beschriftung zu fungieren. Die Menge des Laseradditivs im Polymer ist hierbei u.a. abhängig von dem eingesetzten Polymer. Bevorzugt ist eine Menge von 0,1 bis 0,3 Gew.-% keramischer Nanopartikel, bezogen auf die Menge an Polymer. Dies ist eine sehr geringe Menge im Vergleich zu dem Anteil an Partikeln, welche beispielweise in Sonnencremes zum Einsatz kommen, wo mehrere Prozent erforderlich sind.

Die Nanopartikel können daher in einer sehr geringen Menge, bezogen auf die Menge des Polymers, zum Einsatz kommen, so dass eine hohe Beladung des zu markierenden polymeren Materials mit Laseradditiv nicht erforderlich ist. Die geringe Menge an Nanopartikeln hat keine nachteiligen Auswirkungen auf das Erscheinungsbild und auch die physikalischen, chemischen und mechanischen Eigenschaften des Polymers bzw. eines hieraus erzeugten Kunststoffs. Ein weiterer Vorteil eines geringen Anteils an Laseradditiv ist, dass sich das Polymer dadurch nur unwesentlich, wenn überhaupt, verändert und dessen Verarbeitbarkeit hierdurch nicht beeinträchtigt wird.

Gemäß einer Ausführungsform der Erfindung liegen die Nanopartikel in Form von Nanodots vor. Nanodots sind kugelförmige Nanopartikel und weisen Partikeldurchmesser von maximal etwa 5 nm auf, beispielweise einen Partikeldurchmesser im Bereich von 5 bis 3 nm oder 4 bis 3 nm, insbesondere 3 nm mit enger Größenverteilung. Die Herstellungsverfahren von Nanodots sind generell sehr unterschiedlich. Anorganische, insbesondere keramische Nanodots, wie z. B. TiO₂-Nanodots, werden in der Regel mit einem Sol-Gel-Verfahren hergestellt. Nanodots sind auch kommerziell erhältlich.

Nanodots sind gegenüber Nanopartikeln insbesondere dann vorteilhaft, wenn ein transparentes Polymer ausgewählt wird und dieses auch nach Zugabe der keramischen Nanopartikel transparent bleiben soll. In diesem Fall werden dann bevorzugt Nanodots eingesetzt, da diese das Licht deutlich weniger streuen als größere Partikel, so dass die Transparenz des Polymers sowie hieraus erzeugter Kunststoffe sichergestellt wird.

Bevorzugt werden bei transparenten Polymeren und damit transparenten Kunststoffen die UV-absorbierenden Nanopartikel möglichst klein ausgewählt, um die Lichtstreuung an den UV-absorbierenden Nanopartikeln zu minimieren und damit die Transparenz des Polymers bzw. Kunststoffes so weit wie möglich zu erhalten.

Das "Polymer" soll im Rahmen der vorliegenden Erfindung nicht weiter beschränkt sein. Es kann jede dem Fachmann bekannte Art von Polymer in Frage kommen, wobei das Polymer auch eine Mischung von Polymeren umfassen soll. Als Polymere können beispielweise beliebige Thermoplaste, Duroplaste und Elastomere sowie deren Copolymere, Block-Copolymere und/oder Polymerblends eingesetzt werden.

Thermoplastische Polymere sind beispielweise Polyethylen (PE), Polypropylen (PP), Poly(4-methylpenten) (PMP) (TPX), Polyamide (PA), Polylactid (PLA), Polyvinylchlorid (PVC), Polyvinylidenchlorid, Polycarbonat (PC), Polyacetal, Polyester, wie Polyethylenterephthalat (PET) und Polybutylenterephthalat (PBT), Polyetherester, Polyetherketone, Polyetheretherketon (PEEK), Polyphenylenether, (Meth-)Acrylsäure-Polymere, wie Polyethylacrylate und Polymethylmethacrylat (PMMA), Polyvinylacetat, Polystyrol (PS), Polyacrylnitril (PAN), Acrylnitril-Butadien-Styrol (ABS), Acrylnitril-Styrol-Acrylester (ASA), Styrol-Acrylnitril (SAN), Polycarbonat und Polyethersulfone. Ganz besonders bevorzugt sind Polyolefine, wie Polyethylen und Polypropylen. Duroplastische Polymere sind beispielsweise Polyurethan, Melaminharze, Polyester und Epoxydharze.

Elastomere Polymere sind Naturkautschuke, wie beispielweise Styrol-Butadien-Kautschuk (SBR), Acrylnitril-Butadien-Kautschuk (NBR), Chloroprenkautschuk (CR), Fluor-Polymer-Kautschuk (FKM), Butadien-Kautschuk (BR), Ethylen-Propylen-Dien Kautschuk (EPDM), Silikonkautschuke und flüssigkristalline Elastomere.

Andere Polymere als die oben beschriebenen können ebenfalls eingesetzt werden.

Gemäß einer Ausführungsform werden bevorzugt transparente bis opake Polymere ausgewählt, aus denen transparente bis opake Kunststoffe hergestellt werden, die dann unter Verwendung eines UV-Lasers markiert werden können. Die Polymere können auch farblos sein, insbesondere farblose transparente bis opake Polymere darstellen, aus denen dann farblose transparente bis opake Kunststoffe hergestellt werden. Alternativ ist auch ein hell eingefärbter Kunststoff bevorzugt, bei dem die zugesetzten Nanopartikel ebenfalls nicht zu einer Verfärbung führen.

Dem Polymer bzw. den Polymeren können zusätzlich zu den keramischen Nanopartikeln ein oder mehrere Zusatzstoffe zugegeben werden, die üblicherweise bei der Kunststoff-Herstellung Verwendung finden. Dies sind beispielweise Prozesshilfsmittel, Weichmacher, Gleitmittel, Stabilisatoren, Lösemittel, Flammschutzmittel, Füll- und Verstärkungsstoffe, Farbmittel, wie farbgebende Pigmente und dergleichen. Wenn farblose transparente bis opake Polymere vorliegen, aus denen farblose transparente bis opake Kunststoffe hergestellt werden können, ist es bevorzugt, wenn Farbmittel jeder Art, wie farbgebende Pigmente, nicht zugegeben werden.

Erfindungsgemäß gelingt es auch nach Zugabe der Nanopartikel, eine Lichtstreuung in einem transparenten Kunststoff vollständig zu vermeiden und damit dessen Transparenz vollständig zu erhalten.

Gemäß einer bevorzugten Ausführungsform kann ein Material für die Nanopartikel ausgewählt werden, dessen Brechungsindex dem Brechungsindex des Polymers möglichst ähnlich ist. Dies bewirkt, dass die Lichtstreuungsstärke an der Phasengrenze Nanopartikel / Polymer deutlich verringert wird, so dass keine Verfärbung resultiert. Die Höhe des Brechnungsindex hängt dabei auch von der Größe der Nanopartikel ab. Je kleiner diese sind, desto größer kann die Abweichung sein, ohne dass Lichtstreuung auftritt.

. Beispielhafte Berechnungsindizes (n20D) von einigen transparenten Kunststoffen sind wie folgt: Polypropylen: 1,49; Polyethylen: 1,50; Poly(4-methylpenten) (PMP) (TPX): 1,45; Polystyrol: 1,59; Polycarbonat: 1,59 und Polyethylenterephthalat (PET): 1,64. Beispielhafte Berechnungsindizes (n20D) von einigen UV-absorbierenden Nanopartikeln sind wie folgt: Zinkoxid: 2,0; Titanoxid: 2,87; Aluminiumoxid: 1,77 und Siliziumdioxid: 1,46.

Besonders vorteilhafte Kombinationen von Polymeren und Nanopartikeln wären daher ein oder mehrere Polymere, ausgewählt aus der Gruppe, bestehend aus Polypropylen, Polyethylen, Poly(4-methylpenten) (PMP) (TPX), Polystyrol, Polycarbonat und/oder Polyethylenterephthalat (PET), in Kombination mit Nanopartikeln, ausgewählt aus der Gruppe, bestehend aus Zinkoxid, Titanoxid, Aluminiumoxid und/oder Siliziumdioxid.

Um die Transparenz durch Zugabe von Nanopartikeln möglichst wenig zu beeinträchtigen, also die Lichtstreuung an den Nanopartikeln so gering wie möglich zu halten, ist es daher besonders vorteilhaft, wenn nicht nur die Differenz zwischen dem Brechungsindex des Polymers bzw. Kunststoffes und dem der Nanopartikel so klein wie möglich, sondern auch die Nanopartikel selbst so klein wie möglich gewählt werden.

Weiterhin ist es für die Laserbeschriftung besonders vorteilhaft, wenn die UV-Absorption der Nanopartikel bei 355 nm so hoch wie möglich liegt, wenn ein UV-Laser mit einer Wellenlänge von 355 nm zum Einsatz kommt. Ausgehend hiervon, wäre die Verwendung von Zinkoxid für die Nanopartikel ganz besonders vorteilhaft.

Gegenstand der Erfindung ist auch die Verwendung des lasermarkierbaren Polymers als Material zur Herstellung von Formmassen, Halbzeug oder Fertigteilen.

Das oder die mit Nanopartikeln versehenen Polymere stellen den Rohstoff dar, aus dem durch Kunststoffverarbeitung der eigentliche Kunststoff hergestellt wird. Die Verarbeitung verleiht dem Kunststoff dann die gewünschte Form und Größe und die Endeigenschaften. Formmassen stellen hierbei beispielweise Substanzmischungen aus dem (den) Polymer(en), den Nanopartikeln und ggf. einem oder mehreren Zusatzstoffen dar. Halbzeug ist vorgefertigtes Rohmaterial, ein Zwischenprodukt oder Halbfabrikat, das bei der Verarbeitung des Polymers zum Endprodukt aus Kunststoff erzeugt wird. Ein Fertigteil ist der hergestellte Kunststoffartikel an sich.

Erfindungsgemäß bestehen die Formmassen, Halbzeuge und Fertigteile aus dem lasermarkierbaren Polymer und können somit unter Verwendung eines UV-Lasers markiert werden.

Die Verfahren zur Herstellung von Kunststoffen durch Verformen eines polymeren Materials unter Wärmeeinwirkung sind dem Durchschnittsfachmann bekannt und werden hier nicht im Einzelnen erläutert. Erfindungsgemäß können die Nanopartikel beispielweise beim Compoundieren zugegeben werden, wobei zunächst ein Masterbatch mit einer höheren Konzentration der Nanopartikel hergestellt und dieser dann als Granulat in geringer Menge der Hauptmasse des Polymers bei der Kunststoffverarbeitung zugesetzt wird. Die Kunststoffverarbeitung ist nicht weiter beschränkt und umfasst beispielweise Extrusion, Kalandrieren, Blasformen, Spritzgießen, Gießen, Rotationsformen, Schäumen, Tiefziehen u.v.a.m.

Anschließend kann die Lasermarkierung mit einem geeigneten UV-Laser erfolgen.

Die Erfindung bezieht sich daher auch auf ein Verfahren zur Herstellung einer Markierung und/oder Beschriftung auf einer Formmasse, einem Halbzeug oder Fertigteil, das aus bzw. mit dem lasermarkierbaren Polymer hergestellt wurde, wobei ein UV-Laser durch lokales Bestrahlen die Markierung und/oder Beschriftung auf der Formmasse, dem Halbzeug oder Fertigteil erzeugt.

Die Markierung bzw. Beschriftung der Formmasse, des Halbzeugs oder Fertigteils mit einem UV-Laser erfolgt derart, dass der Probenkörper in den Strahlengang eines UV-Lasers gebracht wird. Die erhaltene Markierung bzw. Beschriftung wird durch die Bestrahlungszeit (bzw. Pulszahl bei Pulslasern) und Bestrahlungsleistung des UV-Lasers sowie des verwendeten Kunststoffs bestimmt. Die Leistung der verwendeten Laser hängt von der jeweiligen Anwendung ab und kann im Einzelfall vom Fachmann ohne weiteres ermittelt werden. Der UV-Laser ist nicht weiter beschränkt. Beispielweise sind UV-Laser mit einer Wellenlänge von 355 nm, 254 nm und 154 nm verwendbar.

Unter Einwirkung von UV-Laserlicht zeigen die keramischen Nanopartikel im Polymer bzw. Kunststoff eine dunkle bis helle Markierung mit hohem Kontrast und ausgeprägter Kantenschärfe. Insbesondere erhält man bei den entsprechend kleinen UV-absorbierenden Nanopartikeln mit Durchmessern im Nanobereich, bevorzugt bei transparenten Polymeren bzw. Kunststoffen, mit UV-Laserstrahlung eine signifikant verbesserte Qualität durch die Lasermarkierung bzw. -beschriftung. Durch die Verwendung eines Lasers gelingt es feine Linien in Form von Buchstaben und/oder Zahlen in der gewünschten Größe sowie Bilder zu erzeugen, wobei die eingesetzten keramischen Nanopartikel dazu beitragen, dass die Kontraststärke und Kantenschärfe beim Markieren bzw. Beschriften deutlich verbessert wird, ohne dass eine Verfärbung des Polymers bzw. Kunststoffes durch Zusatz der beschriebenen Laseradditive auftritt. Die Verbesserung der Laserbeschriftungsqualität beim Einsatz von UV-Lasern ohne Verfärbung des Kunststoffes bei Zumischen des Laseradditives kommt insbesondere bei transparenten und hell eingefärbten Kunststoffartikeln zum Tragen.

Vorteilhaft an der Lasermarkierung ist, dass die erzeugte Markierung, Kennzeichnung bzw. Beschriftung nicht durch mechanische Beschädigung, Abrieb, chemische Einflüsse und dergleichen unlesbar wird. Da sich die Markierung im Kunststoff selbst befindet, ist sie dauerhaft abriebbeständig.

Die Lasermarkierung ist universell einsetzbar und kann auch auf nicht plane Oberflächen, wie gekrümmte Flächen oder strukturierte Oberflächen ohne weiteres aufgebracht werden. Selbst an schwer zugänglichen Stellen eines Artikels kann mit Hilfe von Laserlicht eine Markierung erzeugt werden. Die Lasermarkierung kann dabei berührungslos, mit hoher Geschwindigkeit und sehr flexibel erfolgen. Die Markierungen sind wisch- und kratzfest und können auch nachträglichen Weiterverarbeitungsschritten, beispielweise einem Sterilisationsverfahren unterzogen werden, ohne diese zu beeinträchtigen.

Der Art der Lasermarkierung an sich ist ebenfalls nicht weiter beschränkt. So können beispielweise Zahlen und/oder Buchstaben und sogar komplette Bilder, wie Etiketten, dauerhaft aufgebracht werden. Beispielweise werden über ein Barcodesystem Informationen gespeichert, die bei Bedarf wieder mit Hilfe eines Scanners abgerufen werden können.

Die Markierung von Kunststoffen, beispielsweise Produktionsgütern, ist vielseitig verwendbar und kann auf allen Gebieten erfolgen, wo die Markierung, Kennzeichnung bzw. Beschriftung von Kunststoffen eingesetzt wird.

Die Lasermarkierung kann beispielsweise zur elektronischen Abtastung und Kontrolle während der Produktion verwendet werden. Mögliche Verwendungen von lasermarkierbaren Polymeren und den daraus hergestellten Kunststoffen in Form von Formmassen, Halbzeug und Fertigteilen sind Anwendungen in der Elektro-, Elektronik- und Kraftfahrzeugindustrie, wie beispielweise bei Isolierungen, Leiterplatten, Gehäusen, im Fahrzeugbau als Material für Reifen, Polsterungen, Armaturenbretter, Benzintanks und vieles mehr. Die Markierung, Kennzeichnung und Beschriftung von z.B. Rohren, Kabeln, Leitungen, Zierleisten bzw. Funktionsteilen im Heizungs-, Lüftungs- und Kühlbereich oder Schalter, Stecker, Hebel, Griffe und dergleichen. Eine weitere Verwendung sind Kunststoff-Verpackungen aller Art, z.B. im Lebensmittelbereich oder bei Spielzeug.

Weiterhin findet das erfindungsgemäße Polymersystem Anwendung in der Medizintechnik, beispielsweise bei der Markierung von Petrischalen, Mikrotiterplatten, Einmalspritzen, Ampullen, Probenbehältern, Schläuchen und medizinischen Auffang-, Infusions- und Vorratsbeuteln.

Die Laserbeschriftung kann auch bei Kunststoffmarken zur individuellen Kennzeichnung von Tieren, z.B. Ohrmarken von Nutztieren, eingesetzt werden.

Der Ort und die Form der Lasermarkierung sowie die Art des verwendeten Kunststoffs sind daher nicht weiter beschränkt, so dass eine Vielzahl von Markierungen an Kunststoffen für eine große Reihe an Verwendungen möglich ist.

Nachfolgend soll die vorliegende Erfindung anhand von Ausführungsbeispielen veranschaulicht werden, ohne die erfindungsgemäße Lehre hierauf zu beschränken.

### Ausführungsbeispiele:

Es wurden transparente Testplättchen aus Polystyrol im Spritzgussverfahren hergestellt und deren Lasermarkierungsqualität beim Einsatz eines UV-Lasers zur Markierung untersucht. ZUr Lasermarkierung wurde ein UV-Laser mit einer Wellenlänge von 355 nm eingesetzt.

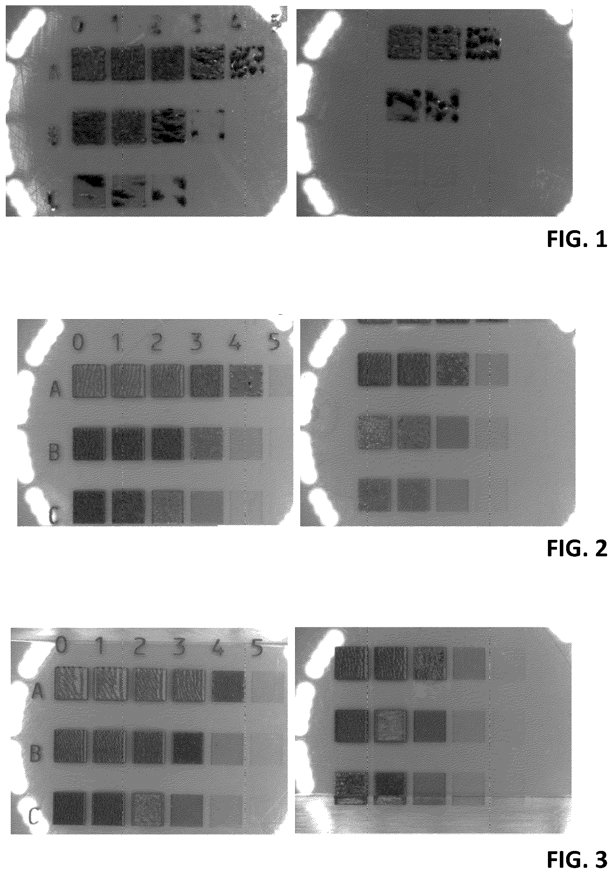

Als Vergleichsbeispiel wurden zwei transparente Testplättchen aus reinem Polystyrol hergestellt und diese mit dem UV-Laser markiert. Die Ergebnisse sind in Fig. 1 dargestellt.

In einem erfindungsgemäßen Beispiel wurden zwei transparente Testplättchen aus Polystyrol im Spritzgussverfahren hergestellt, wobei dem Polystyrol Nanopartikel aus TiO₂ mit einem Durchmesser von 20 nm in einer Menge von 0,25 Gew.-%, bezogen auf das Polymer, zugesetzt wurden. Zur Lasermarkierung wurde der oben angegebene UV-Laser eingesetzt. Die Ergebnisse sind in Fig. 2 dargestellt.

In einem weiteren erfindungsgemäßen Beispiel wurden zwei transparente Testplättchen aus Polystyrol im Spritzgussverfahren hergestellt, wobei dem Polystyrol Nanodots aus TiO₂ mit einem Durchmesser von 3 nm in einer Menge von 0,25 Gew.-%, bezogen auf das Polymer, zugesetzt wurden. Die Nanodots wurden vom Zentrum für Angewandte Nanotechnologie (CAN GmbH) (heute ein Teile eines Fraunhofer Institutes) zur Verfügung gestellt. Zur Lasermarkierung wurde der oben angegebene UV-Laser eingesetzt. Die Ergebnisse sind in Fig. 3 dargestellt.

Fig. 1 zeigt als Vergleichsbeispiel 2 Testplättchen, bei dem die Lasermarkierung zu schlechten Ergebnissen führt. Die Markierungen mit den Kästchen zeigen zum Teil keine klaren Kanten, wobei anstatt ausgefüllten Flächen nur Fragmente erkennbar sind. Die mit Lasermarkierung erzeugten Zahlen (am oberen Rand) und Buchstaben (am linken Rand) sind nicht lesbar.

Fig. 2 zeigt 2 Testplättchen, die ein sehr gutes Ergebnis für die Lasermarkierung bei Verwendung der Nanopartikel gemäß der Erfindung bereitstellen. Die durch Lasermarkierung erzeugten Kästchen, Zahlen (am oberen Rand) und Buchstaben (am linken Rand) haben eine klare Kontur und Kantenschärfe, so dass eine deutlich verbesserte Laserbeschriftungsqualität beim Einsatz eines UV-Lasers ohne Verfärbung des Kunststoffes bei Zumischen des Laseradditives, besonders bei dem hier verwendeten transparenten Polystyrol festgestellt werden kann. Die leichte Graufärbung des Kunststoffs resultiert aus der Eigenfärbung des Kunststoffs an sich und der Erzeugung des Photos; der Kunststoff wurde durch Zugabe der Nanopartikel nicht verfärbt. Ein Verschmutzungseffekt durch die Nanopartikel wurde nicht beobachtet.

Fig. 3 zeigt 2 Testplättchen, die ein sehr gutes Ergebnis für die Lasermarkierung bei Verwendung der Nanodots gemäß der Erfindung bereitstellen. Die durch Lasermarkierung erzeugten Kästchen, Zahlen (am oberen Rand) und Buchstaben (am linken Rand) haben eine klare Kontur und Kantenschärfe, so dass eine deutlich verbesserte Laserbeschriftungsqualität beim Einsatz eines UV-Lasers ohne Verfärbung des Kunststoffes bei Zumischen des Laseradditives, besonders bei dem hier verwendeten transparenten Polystyrol festgestellt werden kann. Die leichte Graufärbung des Kunststoffs resultiert aus der Eigenfärbung des Kunststoffs an sich und der Erzeugung des Photos; der Kunststoff wurde durch Zugabe der Nanopartikel nicht verfärbt. Ein Verschmutzungseffekt durch die Nanopartikel wurde nicht beobachtet.

## Patentansprüche

1. Lasermarkierbares Polymer, das UV-absorbierende keramische Nanopartikel als Additive enthält, die selbst keine Eigenfarbe aufweisen, wobei die Nanopartikel ausgewählt sind aus der Gruppe, bestehend aus Titandioxid, Zinkoxid, Zirkoniumoxid, Aluminiumoxid, Magnesiumoxid, Siliziumdioxid, Alkali- und Erdalkalimetalltitanaten und -zirkonaten oder Mischungen dieser.

2. Lasermarkierbares Polymer nach Anspruch 2,
**dadurch gekennzeichnet, dass**
die Nanopartikel in einer Menge im Bereich von 0,1 bis 0,3 Gew.-%, bezogen auf die Menge des Polymers, enthalten sind.

3. Lasermarkierbares Polymer nach Anspruch 1 oder 2,
**dadurch gekennzeichnet, dass**
die Nanopartikel einen Partikeldurchmesser im Nanometer-Bereich haben, insbesondere einen Partikeldurchmesser im Bereich von 3 bis 200 nm, bevorzugt 3 bis 150 nm, bevorzugter 3 bis 100 nm, insbesondere 3 bis 75 nm oder 3 bis 50 nm oder 3 bis 30 nm oder 3 bis 20 nm aufweisen.

4. Lasermarkierbares Polymer nach Anspruch 1 bis 3,
**dadurch gekennzeichnet, dass**
das Polymer transparent oder opak ist.

5. Lasermarkierbares Polymer nach einem der Ansprüche 1 bis 4,
**dadurch gekennzeichnet, dass**
das Polymer ein oder mehrere Thermoplaste, Duroplaste oder Elastomere darstellt.

6. Lasermarkierbares Polymer nach einem der Ansprüche 1 bis 5,
**dadurch gekennzeichnet, dass**
die Nanopartikel Nanodots darstellen.

7. Lasermarkierbares Polymer nach einem der Ansprüche 1 bis 6,
**dadurch gekennzeichnet, dass**
der Brechungsindex der Nanopartikel und der Brechungsindex des Polymers sich so wenig wie möglich voneinander unterscheiden.

8. Verwendung des lasermarkierbaren Polymers nach einem oder mehreren der Ansprüche 1 bis 7 als Material zur Herstellung von Formmassen, Halbzeug oder Fertigteilen.

9. Formmassen, Halbzeuge und Fertigteile bestehend aus dem lasermarkierbaren Polymer nach einem oder mehreren der Ansprüche 1 bis 7.

10. Verfahren zur Herstellung einer Lasermarkierung und/oder -Beschriftung auf einer Formmassen, einem Halbzeug oder Fertigteil nach Anspruch 9, wobei ein UV-Laser durch lokales Bestrahlen die Markierung und/oder Beschriftung auf der Formmasse, dem Halbzeug oder Fertigteil erzeugt.

## Geänderte Patentansprüche

### Geänderte Patentansprüche gemäss Regel 137(2) EPÜ.

1. UV-lasermarkierbares Polymer, das UV-absorbierende keramische Nanopartikel als Additive enthält, die selbst keine Eigenfarbe aufweisen, wobei die Nanopartikel ausgewählt sind aus der Gruppe, bestehend aus Titandioxid, Zinkoxid, Zirkoniumoxid, Aluminiumoxid, Magnesiumoxid, Siliziumdioxid, Alkali- und Erdalkalimetalltitanaten und -zirkonaten oder Mischungen dieser,
und die Nanopartikel in einer Menge im Bereich von 0,1 bis 0,3 Gew.-%, bezogen auf die Menge des Polymers, enthalten sind.

2. UV-lasermarkierbares Polymer nach Anspruch 1,
**dadurch gekennzeichnet, dass**
die Nanopartikel einen Partikeldurchmesser im Nanometer-Bereich haben, insbesondere einen Partikeldurchmesser im Bereich von 3 bis 200 nm, bevorzugt 3 bis 150 nm, bevorzugter 3 bis 100 nm, insbesondere 3 bis 75 nm oder 3 bis 50 nm oder 3 bis 30 nm oder 3 bis 20 nm aufweisen, wobei als Messverfahren zur Bestimmung der Nanopartikelgrößen die Mehr-Winkel-Lichtstreuung (MALS) eingesetzt wurde.

3. UV-lasermarkierbares Polymer nach Anspruch 1 oder 2,
**dadurch gekennzeichnet, dass**
das Polymer transparent oder opak ist.

4. UV-lasermarkierbares Polymer nach einem der Ansprüche 1 bis 3,
**dadurch gekennzeichnet, dass**
das Polymer ein oder mehrere Thermoplaste, Duroplaste oder Elastomere darstellt.

5. UV-lasermarkierbares Polymer nach einem der Ansprüche 1 bis 4,
**dadurch gekennzeichnet, dass**
die Nanopartikel Nanodots darstellen.

6. UV-lasermarkierbares Polymer nach einem der Ansprüche 1 bis 5,
**dadurch gekennzeichnet, dass**
der Brechungsindex der Nanopartikel und der Brechungsindex des Polymers sich so wenig wie möglich voneinander unterscheiden.

7. Verwendung des UV-lasermarkierbaren Polymers nach einem oder mehreren der Ansprüche 1 bis 6 als Material zur Herstellung von Formmassen, Halbzeug oder Fertigteilen.

8. Formmassen, Halbzeuge und Fertigteile bestehend aus dem UV-lasermarkierbaren Polymer nach einem oder mehreren der Ansprüche 1 bis 6.

9. Verfahren zur Herstellung einer UV-Lasermarkierung und/oder -Beschriftung auf einer Formmassen, einem Halbzeug oder Fertigteil nach Anspruch 8, wobei ein UV-Laser durch lokales Bestrahlen die Markierung und/oder Beschriftung auf der Formmasse, dem Halbzeug oder Fertigteil erzeugt.
